# EUROPÄISCHE PATENTSCHRIFT

(11) **EP 1 148 973 B1**
(45) Veröffentlichungstag und Bekanntmachung des Hinweises auf die Patenterteilung: **07.05.2003**
(21) Anmeldenummer: 00918687.5
(22) Anmeldetag: 29.01.2000
(51) Int. Cl.: B23P 19/04, B60J 10/00

(54) **VORRICHTUNG ZUR MONTAGE VON TÜRDICHTPROFILEN NACH DEM SAS-SGM-VERFAHREN**
DEVICE FOR MOUNTING SHAPED DOOR SEALS USING AN SAS-SGM-TYPE METHOD
DISPOSITIF POUR MONTER DES PROFILS D'ETANCHEITE DE PORTE SELON LE PROCEDE DIT DE SAS-SGM

(30) Priorität: 03.02.1999 DE 19904183
(43) Veröffentlichungstag der Anmeldung: 31.10.2001
(73) Patentinhaber: SAAR-GUMMIWERK GmbH, 66687 Wadern (DE)
(72) Erfinder: FLAUSS, Hasso, D-66606 St. Wendel (DE); SEHR, Ralf, D-66679 Losheim (DE)
(86) Internationale Anmeldenummer: DE0000690
(87) Internationale Veröffentlichungsnummer: WO00045989

(56) Entgegenhaltungen:
- EP-A- 0 449 705
- EP-A- 0 497 048
- EP-A- 0 778 172
- DE-A- 4 401 092
- US-A- 5 067 225
- PATENT ABSTRACTS OF JAPAN vol. 1995, no. 11, 26. Dezember 1995 (1995-12-26) -& JP 07 223566 A (HONDA MOTOR CO LTD), 22. August 1995 (1995-08-22)

## Beschreibung

Die Erfindung betrifft eine Vorrichtung zur Montage von Dicht- und Abdeck-streifen (Anspruch 1), insbesondere von selbsthaltenden Türdichtprofilen, die über einen um die Karosserieöffnung verfahrbaren Roboterarm mit Andruckrolle sowie einer vor- und einer nacheilenden Führungseinrichtung an bzw. auf den Flansch aufrollbar ausgeführt sind. Die Erfindung betrifft außerdem ein Verfahren zur Montage von Türdichtprofilen (Anspruch 10), die über einen Roboterarm in die Karosserieöffnung eingeführt und dann über eine Andruckrollengruppe des Roboterarms auf den Flansch der Karosserie aufgerollt wird, indem dieser den Flansch rundum gemäß vorgegebener Daten abfährt.

Bei der Herstellung von Kraftfahrzeugen müssen insbesondere im Bereich der Türöffnungen Dichtprofile auf die Flansche aufgesetzt werden, um die eingeklappte bzw. eingelegte Tür so weit abzudichten, dass insbesondere Feuchtigkeit nicht in den Fahrgastinnenraum eindringen kann. Die auf den Flanschen angebrachten Dicht- und Abdeckstreifen werden umklammernd darauf aufgesetzt, sodass diese Flansche vollständig abgedeckt und damit geschützt sind. Gleichzeitig sind damit die Insassen des Fahrzeuges geschützt, weil die mehr oder weniger scharfkantigen Flansche durch die Profile abgedeckt sind. Profilformen gibt es dabei Zahlreiche. Sie weisen aber in der Regel einen Profilschlauch auf, der beim Schließen der Tür zusammengedrückt wird, um seine Dichtwirkung möglichst optimal zu entfalten. Bekannt sind sogenannte Rollformig-Systeme, bei denen das Gummi/Metallteil des Profilschlauches zunächst von Hand auf den Flansch aufgedrückt und dann mit einem Handgerät verformt wird. Eine derartige Arbeit ist aufwendig und sehr von der Sorgfalt des jeweiligen Arbeiters abhängig, sodass schon früher versucht worden ist, automatisierte Lösungen zu finden. Aus der DE-OS 44 11 433 ist es bekannt, den Klemm- und Führungsvorgang über einen Automaten vorzunehmen, wobei der Profilschlauch zunächst von Hand auf den Flansch aufgesteckt werden muss. Mit Hilfe des Automaten wird dann der Träger bzw. eine Seite des U-formigen Trägers an den Flansch durch eine Anpressvorrichtung angeformt. Zusätzlich zu der Anpressvorrichtung sind Antriebs- und Führungsrollen vorgesehen, wobei auch hier letztlich die Sorgfalt des Arbeiters Voraussetzung für eine genaue Arbeit und einen genauen Sitz des Profilschlauches ist. Aus der DE-OS 195 45 733 ist ein Verfahren und eine Vorrichtung bekannt, bei der zur Gewährleistung eines genauen Sitzes des Profilschlauches der Andruckrolle eine Flanschabtasteinrichtung vorgeordnet ist, über die die nachfolgende Montagerolle bzw. Andruckrolle dann genau gesteuert wird, um so den sicheren Sitz des Profilschlauches zu gewährleisten. Nachteilig dabei ist, dass insbesondere bei aufwendigeren Formen der Profilschläuche, diese sich in den Führungsrollen verkanten können, so dass dann ein genaues Aufdrücken bzw. -pressen nicht mehr möglich ist. Nachteilig ist schließlich, dass der Roboterarm jeweils seitlich in das Profil eingeschoben werden und dann den Profilschlauch einrollen muss, so dass durch diese Bewegung schon der Profilschlauch leicht verkanten kann. Auch ist der Profilschlauch kaum mehr automatisch aufzufinden und zu fassen, wenn er über den Roboterarm seitlich in die Türöffnung einfährt.

Desweiteren ist aus der JP 07223566 A eine Vorrichtung bekannt, mit deren Hilfe ein Dichtungsstreifen an Karosserieteilen angebracht werden kann. Die Vorrichtung weist einen Roll- und einen Führungsinechanismus auf, um die Dichtung klemmend und rollend auf den Flansch zu stecken. Hierbei wird die Dichtung an der Andruckrolle festgeklemmt, was zu einer aufwendigen Bauform der Andruckrolle führt.

Die EP 0449705 zeigt eine Vorrichtung, die dazu bestimmt ist, eine ringförmige Dichtung aufzuziehen, die einen angeformten Randkeil aufweisen kann oder nicht und mit einem zangenförmigen Teil versehen ist, der dazu geeignet ist, auf den Falz aufgesteckt zu werden. Die Dichtung muß zu Beginn am Rand der Anbringungslinie an einer V- förmigen Vorrichtung aufgehängt werden. Erst hier wird sie vom Roboter übernommen. Die große Anzahl von Teilschritten zum Aufbringen der Dichtung bedeutet einen hohen Zeitaufwand insbesondere auch das Umsetzen, nachdem ca drei Viertel der Dichtungslänge eingebracht sind. Die hier beschriebene Andruckrolle ist starr gelagert, so daß sie Ungenauigkeiten im Verlauf des Flansches, auf den die Dichtung aufzubringen ist, nicht ausweichen kann.

Die DE 4401092 betrifft eine Vorrichtung zur Montage von Profildichtungen, die mit einem in drei Dimensionen beweglichen Roboterarm verbindbar ist, der mit Antriebselementen und einer Steuerung verbunden ist und die als Handhabungselement einen Hammer aufweist, der mit einem in Richtung einer Hammerlängsachse beweglich angetriebenen Hammerkopf versehen ist. Hier wird zum Anbringen der Dichtung auf den Flansch eines Karosserieteiles ein pulsierender Hammer verwendet. Diese Lösung ist technisch aufwendig; die Vermeidung von Schäden an der Karosserie insbesondere bei Ungenauigkeiten im Verlauf des Flansches, auf den die Dichtung aufgebracht werden soll, schwierig. Weiterhin ist ein aufwendiges Führungssystem beschrieben. Das Dichtungsband wird über drei Stufen zum Hammerkopf geführt. Die Größe der Fenster der Führungen kann über Aktuatoren verändert werden, bzw. kann mittels der Aktuatoren eine Öffnung zum Einführen des Dichtungsbandes in diese Führungsfenster geschaffen werden. Die Führungssysteme sind symmetrisch angeordnet, aber nicht schwenkbar gelagert.

Der Erfindung liegt daher die Aufgabe zugrunde, eine Montagevorrichtung zu schaffen, mit der der Aufrollvorgang automatisch und ohne aufwendige Mess- und Regeltechnik ablaufen kann und mit der ein optimaler Sitz des Türdichtprofils auf dem Flansch erreicht wird.

Die Aufgabe wird gemäß der Erfindung dadurch gelöst, dass die nacheilende Führungseinrichtung das Türdichtprofil, vorzugsweise beim Anfahrvorgang klemmend ausgebildet und schaltbar ist und dass die nacheilende Führungseinrichtung sich unmittelbar nach Einrollbegin automatisch öffnend und wegschwenbard ausgebildet ist.

Bei einer derart ausgebildeten Vorrichtung ist es zunächst einmal möglich, mit Hilfe des Roboterarmes bzw. des Roboters, das zum geschlossenen Ring geformte Türdichtprofil aufzunehmen und in die Tür einzuführen, ohne dass die Gefahr besteht, dass das Türdichtprofil verkantet, verrutscht oder sonst seinen Sitz verändert. Da es während dieses Bewegungsvorganges und auch während des Beginns des Einrollvorganges über eine der Führungseinrichtungen eingeklemmt, d. h. also fixiert ist, kann es genau aufgesetzt und dann auf den Flansch aufgerollt werden, ohne dass die Gefahr besteht, dass es nicht den genauen Sitz einnimmt, der vorgeschrieben ist. Die vorzugsweise antriebslos angeordnete und ausgebildete Andruckrolle braucht nicht geführt und gesteuert zu werden, sondern folgt quasi dem Flansch und legt den Profilschlauch immer richtig an bzw. drückt ihn auf den Flansch bzw. den Steg des Flansches auf. Durch die schwimmende Lagerung kann die Andruckrolle nach rechts und links gewisse Wege zurücklegen, ohne dass eine Beeinträchtigung erfolgt, wobei man davon ausgehen kann, dass diese seitlichen Bewegungen bis zu 10 mm erfolgen, dabei aber immer noch ein einwandfreies Aufdrücken des Profilschlauches auf den Steg des Flansches erfolgt. Dabei hat der zum Ring geformte Türdichtschlauch einen etwas kleineren Durchmesser als die Türöffnung, sodass immer ein glatter Sitz des Türdichtprofils gewahrleistet ist, das mit einer gewissen Spannung hier aufgesetzt und festgesetzt werden kann.

Nach einer zweckmäßigen Ausbildung der Erfindung ist vorgesehen, dass die vor- und die nacheilende Führungseinrichtung an der Andruckrolle symmetrisch öffnend ausgebildet sind. Die Führungseinrichtungen können damit genau um das jeweilige Profil herumgelegt werden und zwar so, dass das Profil darin wirklich geführt und gesichert geführt ist, wobei durch die symmetrische Öffnung das sichere Umfassen, aber auch die Möglichkeit des Fixieren bzw. Einklemmens gegeben ist. Ohne dieses Einklemmen würde ein sehr unsicherer Sitz des Türdichtprofils zu befürchten sein.

Um das Türdichtprofil mit der notwendigen Spannung und damit dem genauen Sitz auf den Flansch aufbringen zu können, sieht die Erfindung vor, dass die nacheilende Führungseinrichtung das Türdichiprofil, vorzugsweise beim Anfahrvorgang klemmend ausgebildet und schaltbar ist. Die Führungseinrichtung, die um das Dichtprofil herumgreifen kann, fixiert das Türdichtprofil genau und sorgt dann beim ersten Andruck über die Andruckrolle dafür, dass schon dabei das Türdichtprofil genau geführt auf den Flansch aufgepresst werden kann. Das Türdichtprofil sitzt unter Spannung zwischen der entsprechenden Führungseinrichtung und der voreilenden Andruckrolle.

Die nacheilende Führungseinrichtung sorgt für die notwendige, eingespannte Anordnung des Türdichtprofils, wobei sie nacheilend ergänzende Führungsaufgaben wahrnehmen soll, um einen immer optimalen Sitz des Türdichtprofils auf dem Flansch zu gewährleisten. Dazu sieht die Erfindung nun vor, dass die nacheilende Führungseinrichtung sich unmittelbar nach Einrollbeginn automatisch öffnend und wegschwenkend ausgebildet ist. Dadurch, dass sie wegschwenkt, gibt sie das Türdichtprofil frei, sodass nun der weitere Aufrollvorgang automatisch ablaufen kann. Dabei wird diese nacheilende Führungseinrichtung so geführt, dass sie dennoch ihre Führungsanfgabe wahrnimmt, wobei die spezielle Ausführung der nacheilenden Führungseinrichtung weiter hinten noch erläutert ist.

Aufgrund der Fixierung des Türdichtprofils zwischen der nacheilenden Führungseinrichtung und der voreilenden bzw. der davor befindlichen Andruckrolle, wird das Türdichtprofil immer genau auf den Flansch aufgesetzt und befindet sich dabei immer in der gleichen Position. Dies soll auch beim weiteren Abrollen der Andruckrolle sichergestellt werden, und zwar indem die Andruckrolle auf der Rollfläche eine mit dem Türdichtprofil korrespondierende Profilierung aufweist. Durch diese Profilierung sitzt das Türdichtprofil immer mit der entsprechenden Öffnung auf den Flansch zugewandt auf der Rollfläche auf und kann immer genau vertikal aufgedrückt werden, ohne dass es zu Beeinträchtigungen, Verklemmungen o. Ä. kommen kann. Dabei kann durch entsprechende Ausbildung der Andruckrolle diese Profilierung auch verändert werden, wenn es notwendig ist, anders ausgebildete Dichtprofile einzusetzen. Denkbar ist es hierzu, dass die Profilierung abschraubbar oder abziehbar ausgebildet ist, d. h. einem entsprechenden Ring zugeordnet ist.

Gerade bei den moderneren kleinbauenden Karosserien können die Türdichtprofile zum Einsatz kommen, die seitlich vorsiehende Dichtungsansätze aufweisen, von dem Umfang her gesehen aber eben nur an einigen Stellen. Um auch hierbei eine einwandfreie Verarbeitung sicherzustellen, ist vorgesehen, dass der Andruckrolle ein auf den partiell vorgesehenen zusätzlichen Dichtungsansatz einwirkender seitlicher Niederhalter zugeordnet ist. Dieser Niederhalter sorgt dafür, dass der Dichtungsansatz beim Aufrollvorgang nicht hinderlich ist, sondern vielmehr ein einwandfreies Andrükken des Türdichtprofils auf den Flansch sicherstellt bzw. ermöglicht.

Bei größeren Karosserien oder aufwendigeren Arbeiten kann es zweckmäßig sein, der Andruckrolle einen Hauptandruckrollenantrieb zuzuordnen, um so auch ohne einen entsprechenden Roboter bzw. einen entsprechend weitgehend ausgerüsteten Roboter Profile aufrollen zu können.

Um sicherzustellen, dass die Andruckrolle das Türdichtprofil auch immer mit der notwendigen Kraft auf den Flansch aufdrückt, ist vorgesehen, dass die Andruckrolle pneumatisch vorgespannt ausgebildet und dabei die Vorspannung wählbar ist. Je nach Ausbildung des Türdichtprofils kann somit die Andruckrolle mit mehr oder weniger Vorspannung das Türdichtprofil auf den Flansch aufpressen. Hierdurch ist beispielsweise die Möglichkeit gegeben, mit einer starken Stahiklammer ausgerüstete Dichtprofile dennoch sicher auf einen vielleicht etwas breiteren Flansch aufzupressen.

Weiter vorn ist bereits erläutert worden, dass ein Niederhalter eingesetzt ist, über den der Dichtungsansatz, der nur partiell vorgesehen ist, während des Aufrollvorganges so fixiert und geführt ist, dass er diesen Aufrollvorgang nicht behindert. Dies ist insbesondere dann zu erreichen, wenn der Niederhalter als Führungsgleitstück ohne Führungsrollkörper ausgebildet ist. Der Niederhalter drückt den Dichtungsansatz dabei insbesondere von dem Bereich des Türdichrprofils weg, der auf den Flansch aufgeklemmt wird.

Eine besonders schonende Führung des Türdichtprofils mit dem zusätzlichen Dichtungsansatz ist dann gegeben, wenn der als Führungsrollkörper ausgebildete Niederhalter als pneumatisch zu betätigender Profil-Führungskäfig geformt ist, der bei der voreilenden Führungseinrichtung eine Profilvororientierung und bei der nacheilenden Führungseinrichtung eine Klemmung beim Einrollstart bewirkend ausgeführt ist. Der Niederhalter kann dabei die Funktion der zweiten Rolle der Führungseinrichtung übernehmen oder so ausgebildet sein, wobei es von Vorteil ist, wenn er die Funktion des Profil-Führungskäfiges ausführen kann.

Die gesamte Andruckeinrichtung kann mit einer Art Nachandruckrolle versehen werden, indem die Andruckrollengruppe rechtwinklig zur Montagerichtung in einer zweiten Achse schwimmend gelagert, antriebsfrei und über einen pneumatischen Sperrzylinder für den Anfahrvorgang blockierbar ausgebildet ist. Diese Ausbildung erleichtert und sichert den Aufrollvorgang, weil die Andruckrolle entsprechende Bewegungen ausführen kann, ohne den Aufrollvorgang zu beeinflussen, wobei aber wenn notwendig eine Nachkorrektur möglich wird. Die schwimmende Lagerung der Achsen verhindert Blockierungen oder unangenehme Beeinflussungen des Türdichtprofils beim Aufrollvorgang.

Die aus Kunststoff, Gummi oder ähnlichem Material bestehenden Türdichtungsprofile können mit der erfindungsgemäßen Vorrichtung besonders günstig auf die jeweiligen Flansche der Karosserien aufgerollt werden, weil die Führungseinrichtungen, der Niederhalter und weitere Führungen als Kugelrollführung mit gehärteten und geschliffenen Laufbahnen ausgeführt sind. Diese glatten Laufbahnen sichern ein gleichmäßiges Aufliegen der Türdichtprofile und eine günstige Möglichkeit, um das Türdichtprofil zwischen der nacheilenden Führungseinrichtung und der Andruckrolle gespannt und sicher geführt zu halten.

Eine weitere zweckmäßige Ausführung sieht vor, dass der schwimmenden Achse oder den Achsen Grenzstellungsmesser (Sensoren) zugeordnet und deren Daten über die Robotersteuerung auswertbar sind. Als Grenzstellungsmesser werden zweckmäßigerweise Sensoren eingesetzt, die die jeweilige Position der schwimmenden Achsen ermitteln und überwachen und die entsprechenden Daten so weitergeben, dass die Raumbahn des Roboters entsprechend korrigiert wird.

Weiter vorn ist bereits erläutert worden, dass die Andruckrolle pneumatisch gelagert bzw. sie pneumatisch vorgespannt ist. Die Hauptrollenspannung und die der Führungseinrichtungen wird dabei über den Führungseinrichtungen und der Andruckrolle zugeordnete Wegeventilen bzw. Druckregelventilen optimiert, wobei diese Wegeventile bzw. Druckregelventile vorzugsweise in die Stellzylinder integriert sind.

Bei einem Verfahren zur Montage von Türdichtprofilen gemäß Anspruch 10, wird eine einwandfreie Auflage des Türdichtprofils auf den Flansch auch dann ermöglicht, wenn das Türdichtprofil mit Hilfe eines Roboterarms seitlich in die Karosserieöffnung eingeführt wird, weil das Türdichtprofil zu einem geschlossenen Ring mit Untermaß geformt und von der nachlaufenden Führungseinrichtung eingeklemmt und nach Einrollbeginm dann komplett gelöst und weiter aufgerollt wird, wobei während des Aufrollvorganges mit der Andruckrolle aufgrund der Ausbildung des Flansches notwendig werdende Ausgleichsbewegungen automatisch ausgeführt werden. Der Roboterarm fährt also rund um die Karosserieöffnung dem jeweiligen Flansch entsprechend, wobei er sich gemäß vorgegebenem Programm bewegt, kleine Korrekturen aber problemlos möglich werden, weil die Andruckrolle notwendig werdende Ausgleichsbewegungen ausführen kann. Damit ist ein automatischer Ablauf des ganzen Montagevorganges möglich, ohne dass die Gefahr besteht, dass der Roboter aufgrund seiner Andruckkraft das Türdichtprofil schräg oder zu fest auf den Flansch aufsetzt und aufrollt. Vielmehr wird sehr schonend für das Türdichtprofil und für die gesamte Einrichtung dieses auf den Flansch aufgesetzt, quasi vorgespannt und dann erst aufgerollt, wobei mit Beginn des Aufrollvorganges gleichzeitig die Fixierung des Türdichtprofils wieder aufgehoben wird, sodass der gesamte Vorgang dann problemlos und genau geführt ablaufen kann. Dabei wird vorteilhaft auf aufwendige Messeinrichtungen und Führungseinrichtungen verzichtet.

Eine Weiterbildung sieht vor, dass die Andruckrolle und/oder weitere Teilrollen schwimmend gelagert werden, wobei über Messfühler die Abweichungen gemessen und für die Raumbahnkorrektur des Roboters verwendet werden. Der Roboter kann so quasi immerwährend korrigiert werden, sodass die Führung der Andruckrolle selbst bei größeren Abweichungen möglich wird, weil der Abweichweg der Andruckrolle immer wieder nachvollzogen werden kann.

Die Erfindung zeichnet sich dadurch aus, dass eine Vorrichtung und ein Verfahren geschaffen sind, mit denen der komplizierte Montagevorgang von Türdichtprofilen automatisiert bzw. insgesamt automatisch abgewickelt werden kann. Eventuell auftretende Abweichungen werden kontinuierlich korrigiert bzw. die aufgenommenen Korrekturen werden so weitergegeben, dass der Roboter bei seinem Gesamtprogramm bleibend dennoch immer genau das Türdichtprofil auf den jeweils rundum laufenden Flansch aufrollen kann. Vorteilhaft ist dabei weiter, dass aufgrund der normierten Öffnungen an Automobilen die jeweiligen Türdichtprofile so weit vorbereitet werden können, dass sie als ein zum Ring geschlossenes Profi mit Untermaß für den Roboter so angeordnet werden können, dass er sie sich abnimmt und für die jeweilige Karosserieöffnung dann auch entsprechend verarbeitet.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine schematische Wiedergabe eines Montageroboters beim Montieren eines Türdichtprofils,
- Fig. 2: eine Seitenansicht eines derartigen Roboters mit Andruckrolle und Führungseinrichtungen,
- Fig. 3: eine Vorkopfansicht der Andrucktolle, die dem Roboterarm zugeordnet ist,
- Fig. 4: eine Seitenansicht eines der beiden Führungseinrichtungen mit zwei Rollen,
- Fig. 5 a-f: Dichtprofile vor und während bzw. nach der Montage,
- Fig. 6: eine Draufsicht auf den die Andruckrolle tragenden Arm,
- Fig. 7: eine andere Ausbildung einer Führungseinrichtung mit zwei Rollen und
- Fig. 8: eine dritte Ausführungsform mit Andruckrollen.

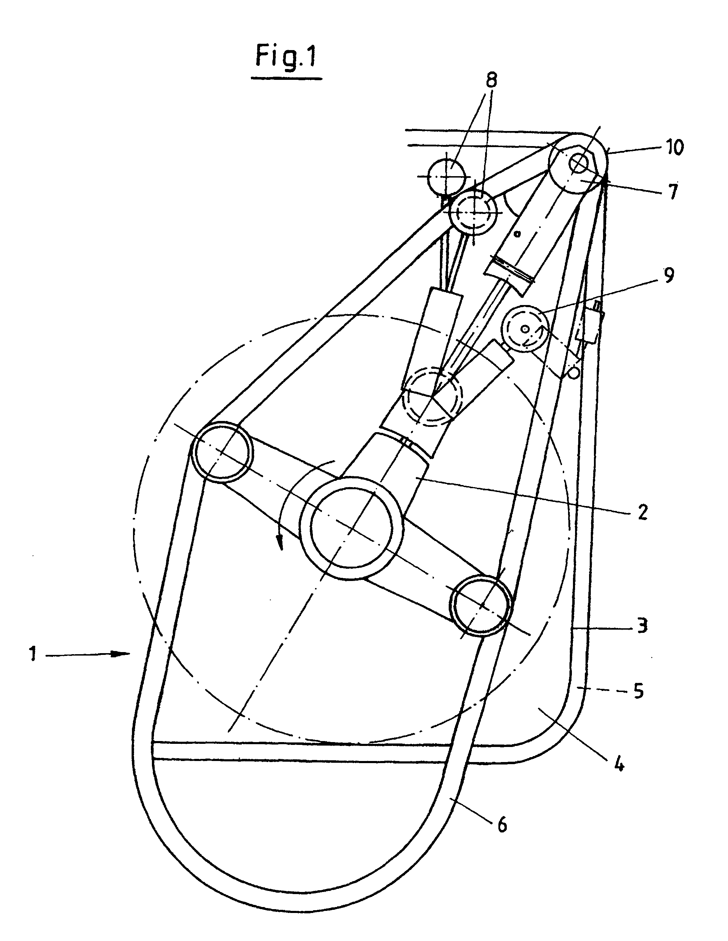

Fig. 1 zeigt einen Montageroboter 1 in vereinfachter Wiedergabe, wobei der Montageroboter 1 mit seinem Roboterarm 2 in einer Situation bzw. Position wiedergegeben ist, in der er gerade damit anfängt, eine Karosserie 3 mit einem Türdichtprofil 6 zu versehen. Dabei muss dieses Türdichtprofil 6 auf den Flansch 5 der Karosserieöffnung 4 aufgesetzt und dann aufgerollt werden, wobei die Karosserieöffnung 4 in einer idealisierten Form wiedergegeben ist. Bei heutigen Automobilen sind unterschiedlichste Formen von Karosserieöffnungen 4 vorhanden, sodass schon bei einem einzigen Fahrzeug der Montageroboter 1 mehrfach umdisponiert werden muss.

Der Roboterarm 2 ist mit einer Andruckrolle 7 ausgerüstet, die vorgespannt am Roboterarm 2 gelagert ist und so bei genauer Führung des Türdichtprofils 6 dafür sorgt, dass das Türdichtprofil 6 auf dem Flansch 5 gleichmäßig aufgerollt wird. Hierzu sind eine voreilende Führungseinrichtung 8 und eine nacheilende Führungseinrichtung 9 vorgesehen.

Sowohl die voreilende Führungseinrichtung 8 wie auch die nacheilende Führungseinrichtung 9 sind so ausgebildet, dass sie das Türdichtprofil 6 in Art eines Profil-Führungskäfiges erfassen und fixieren, je nach dem in welche Richtung die Andruckrolle 7 ihre Andruckarbeit ausführt. Dies bedeutet, dass mit einer und derselben Vorrichtung in beide Richtungen der Arbeitsprozess durchgeführt werden kann. Beide Führungseinrichtungen 8, 9 können sowohl die Funktion der voreilenden Führung wie auch der nacheilenden Führung übernehmen. Daher sind die Führungseinrichtungen 8, 9 auch in aller Regel gleich ausgebildet, wobei in Fig. 1 dies nicht der Fall ist.

Die Andruckrolle 7 verfügt über eine Rollfläche 10, die wie weiter hinten erläutert wird, mit einer Profilierung 11 dafür sorgt, dass das Türdichtprofil 6 genau fixiert auf den Flansch 5 aufgesetzt und aufgerollt wird.

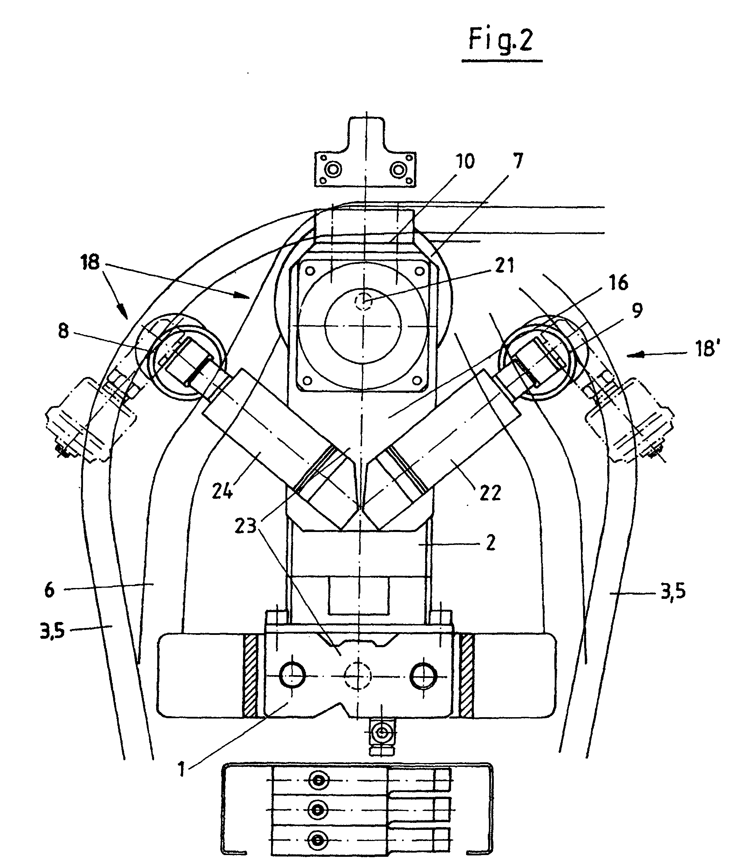

Fig. 2 verdeutlicht eine Ausführung, bei der beide Führungseinrichtungen 8, 9 vom Grundsatz her gleich ausgebildet sind. Es handelt sich quasi um Andruckrollengruppen 18, über die das Türdichtprofil 6 auf den Flansch 5 aufgelegt und dann aufgerollt wird. Das Türdichtprofil 6 ist daher auch in zwei Positionen gezeigt, je nach dem in welche Richtung der Roboterarm 2 die Andruckrolle 7 führt.

Der Fig. 2 kann entnommen werden, dass die Andruckrolle 7 einem Zylinder 16 zugeordnet ist, der als Pneomatikzylinder ausgebildet mit einer bestimmten Vorspannung versehen ist, um so eine immer gleichmäßige Aufrollarbeit ausführen zu können. Die beiden Andruckrollengruppen 18, 18' sind ebenfalls mit einem Stellzylinder 22 bzw. 24 ausgerüstet, die im Prinzip gleich ausgebildet sind, wie der Stellzylinder 23 der Andruckrolle 7.

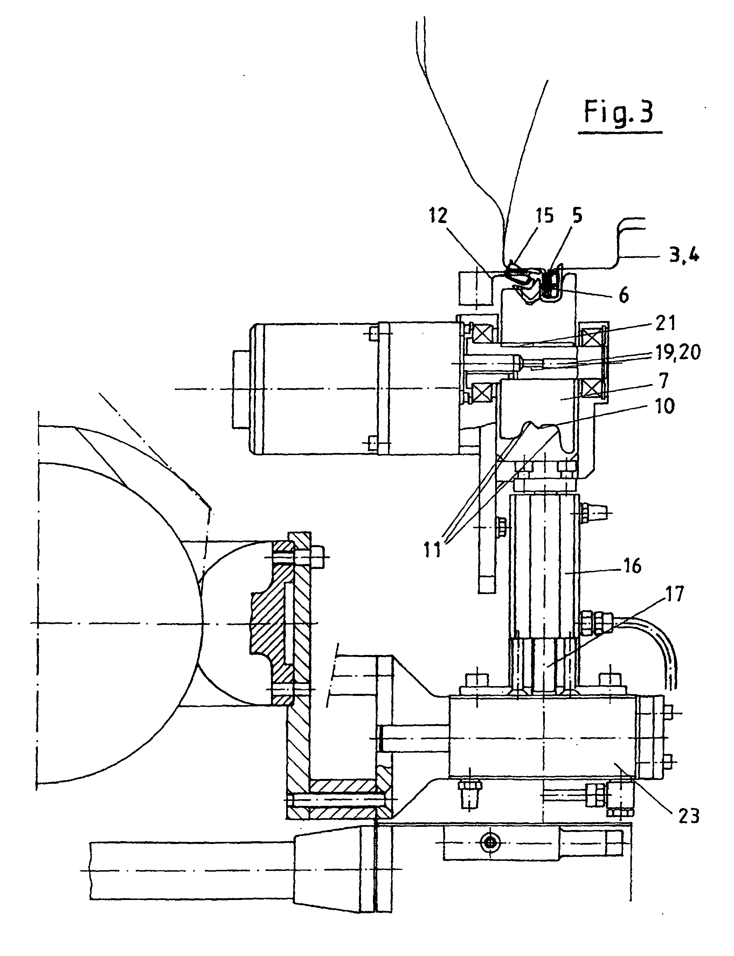

Von der Seite her gesehen wird nach Fig. 3 deutlich, dass die Andruckrolle 7 mit einer Rollfläche 10 versehen ist, die eine bestimmte Profilierung 11 aufweist. Dadurch wird das mehrteilige Türdichtprofil 6 genau geführt. Über den Niederhalter 12 wird dafür gesorgt, dass der Dichtungsansatz 15 so gelegt wird, dass er beim Aufdrükken bzw. Aufrollen des Türdichtprofils 6, d. h. also des Hauptbereiches dieses Türdichtprofils 6, auf den Flansch 5 der Dichtungsansatz 15 dann genau seine Dichlfunktion einnimmt und nicht verkantet. Hierzu muss berücksichtigt werden, dass dieser Dichtungsansatz 15 nicht rundum vorgesehen ist, sondern nur segmentweise, sodass die Ausbildung des Niederhalters 12 für die Gesamtfunktion sehr wichtig ist. Dabei kann der Niederhalter 12 die hier in Fig. 1 wiedergegebene Ausführung eines Führungsgleitstückes oder auch eines Führungsrollkörpers aufweisen. Alle Führungen sind als Kugelrollführung mit gehärteten und geschliffenen Laufbahnen aufgeführt, sodass auch für Türdichrprofile 6 oder Dichtprofile anderer Bauart vorteilhaft sicher zum Einsatz kommen können.

Über den Zylinder 16 bzw. den Stellzylinder 23 kann die jeweilige Position der Andruckrolle 7 verändert und den Gegebenheiten angepasst werden- Mit 17 ist ein Ausgleichsteil bezeichnet, das einer genauen Führung des Zylinders 16 dient.

Die Andruckrolle 7 verfügt über eine schwimmende Lagerung, d. h. die Achse 21 ist schwimmend gelagert. Über Grenzstellungsmesser 19, 20, vorzugsweise in Form von Sensoren, wird die jeweilige Position der Andruckrolle 7 ermittelt und dazu verwertet, die Raumbahn des Roboters 1 bzw. des Roboterarms 2 zu korrigieren.

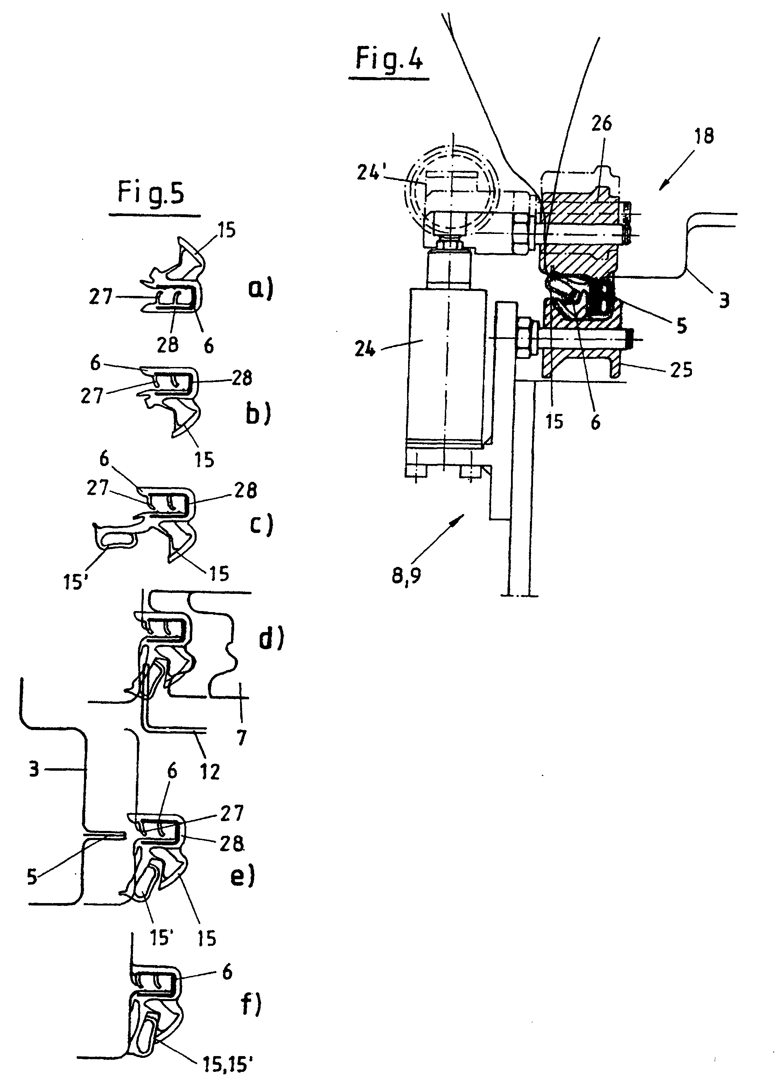

Fig. 4 sowie die Figuren 7 und 8 zeigen eine Andruckrollengruppe 18 bzw. eine Führungseinrichtung 8, 9 in Seitenansicht. Erkennbar ist hier, dass das Türdichtprofil 6 mit dem Dichtungsansatz 15 zwischen den beiden Rollen 25, 26 genau geführt werden kann und auch fixiert werden kann, wenn mit dem Aufrollvorgang begonnen wird. Der Dichtungsansatz 15 ist dabei so geführt und gelegt, dass er wie Fig. 5 f entnommen werden kann, mit Abschluss des Aufrollvorganges den Bereich so vorteilhaft abdichtet, dass die Tür wie vorgesehen ihre Funktion voll erfüllen kann.

Fig. 5 zeigt in den Teilabschnitten a - f die Handhabung mit dem Türdichtprofil 6, das entsprechend geführt und über die Andruckrolle 7 abgestützt auf den Flansch 5 aufgeschoben bzw. aufgerollt wird, um dann die Posidon nach Fig. 5 f einzunehmen. Das eigentliche Türdichtprofil 6 verfügt über Lippen 27, die eine bessere Fixierung des Flansches 5 im Inneren ermöglichen sowie über ein eingelegtes Aussteiffungsteil 28, um auch eine bleibend sichere Positionierung des Türdichtprofils 6 zu gewährleisten.

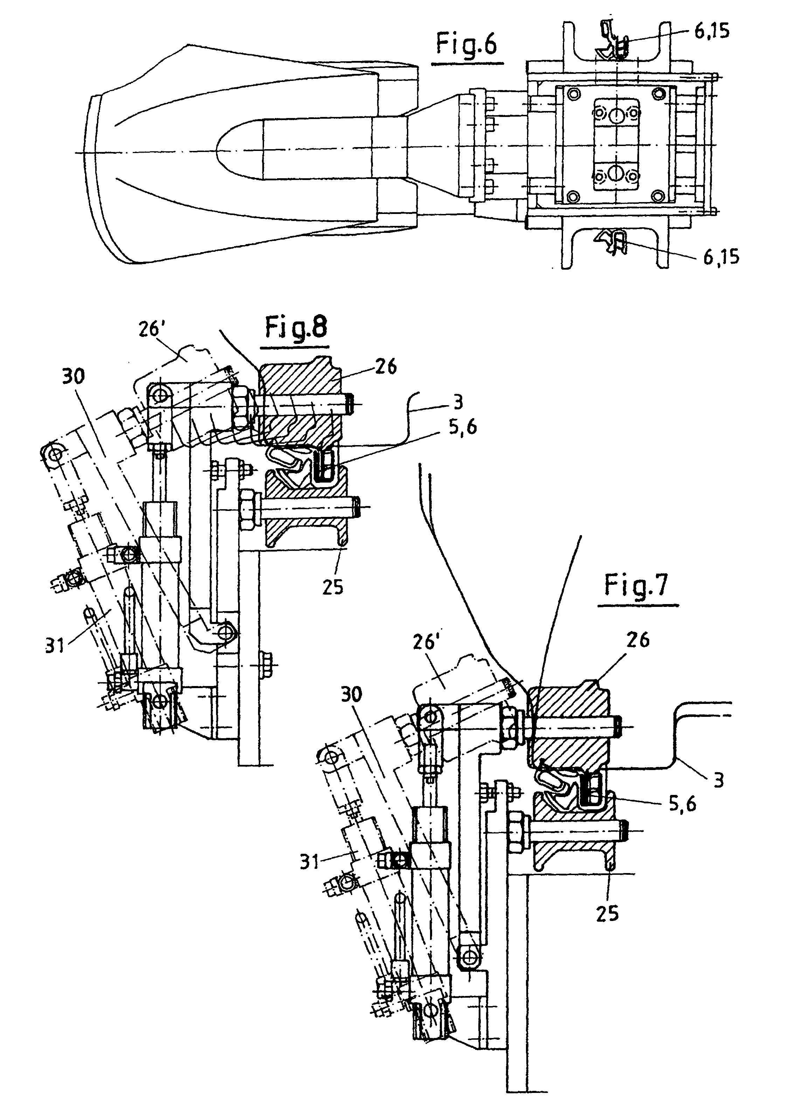

Während nach Fig. 4 das Einschwenken der oberen Rolle 26 mit Hilfe eines nicht näher gezeichneten Schwenkmechanismuses erfolgt, sehen die Figuren 7 und 8 hierzu einen Schwenkhebel 30 und einen Schwenkzylinder 31 vor. Insbesondere Fig. 8 können die verschiedenen Teilpositionen des Schwenkhebels 30 bzw. der Führungseinrichtung 8, 9 bzw. der oberen Rolle 26 entnommen werden. Auch diese Ausführungen nach Fig. 7 und 8 zeigen, dass das Türdichtprofil 6 sowohl sicher geführt wie auch so gepresst werden kann, dass die notwendige Startposition bei der Aufrollarbeit genau eingestellt und eingehalten werden kann.

Fig. 6 schließlich zeigt eine Draufsicht auf den Stützarm, der endseitig die Andruckrolle 7 trägt. Hier ist die Andruckrolle 7 nur mit einer geringen Profilierung versehen, was je nach Ausführung auch denkbar ist.

## Patentansprüche

1. Vorrichtung zur Montage von Dicht-und Abdeckstreifen, insbesondere von selbsthaltenden Türdichtprofilen (6), die über einen um die Karosserieöffnung (4) verfahrbaren Roboterarm (2), der von einem direkt oder indirekt schwenkbar ausgebildeten und dabei über den Roboterarm (2) das zum Ring geschlossene Türdichtprofil (6) aufnehmende und vom Lagerplatz zur Karosserieöffnung (4) führenden Roboter (1) getragen wird, mit schwimmend gelagerter Andruckrolle (7) sowie einer vor- und einer nacheilenden Führungseinrichtung (8,9), die das Türdichtprofil (6) einklemmend ausgerüstet sind, an bzw. auf den Flansch (5) aufrollbar ausgeführt sind,
**dadurch gekennzeichnet,**
**dass** die nacheilende Führungseinrichtung (9) das Türdichtprofil (6), vorzugsweise beim Anfahrvorgang klemmend ausgebildet und schaltbar ist und dass die nacheilende Führungseinrichtung (9) sich unmittelbar nach Einrollbeginn automatisch öffnend und wegschwenkend ausgebildet ist.

2. Vorrichtung nach Anspruch 1,
**dadurch gekennzeichnet,**
**dass** die vor- und die nacheilende Führungseinrichtung (8, 9) an der Andruckrolle (7) symmetrisch Öffnend ausgebildet sind.

3. Vorrichtung nach einem der vorhergehenden Ansprüche,
**dadurch gekennzeichnet,**
**dass** der Andruckrolle (7) ein auf den partiell vorgesehenen zusätzlichen Dichtungsansatz (15) einwirkender seitlicher Niederhalter (12) zugeordnet ist.

4. Vorrichtung nach einem der vorhergehenden Ansprüche,
**dadurch gekennzeichnet,**
**dass** die Andruckrolle (7) pneumatisch vorgespannt ausgebildet und dabei die Vorspannung wählbar ist.

5. Vorrichtung nach einem der vorhergehenden Ansprüche,
**dadurch gekennzeichnet,**
**dass** der Niederhalter (12) als Führungsgleitstück ohne Führungsrollkörper ausgebildet ist.

6. Vorrichtung nach einem der vorhergehenden Ansprüche,
**dadurch gekennzeichnet,**
**dass** der als Führungsrollkörper ausgebildete Niederhalter (12) als pneumatisch zu betätigender Profil- Führungskäfig geformt ist, der bei der voreilenden Führungseinrichtung (8) eine Profilvororientierung und bei der nacheilenden Führungseinrichtung (9) eine Klemmung beim Einrollstart bewirkend ausgeführt ist.

7. Vorrichtung nach einem der vorhergehenden Ansprüche,
**dadurch gekennzeichnet,**
**dass** die Andruckrollengruppe (18) rechtwinklig zur Montagerichtung in einer zweiten Achse schwimmend gelagert, antriebsfrei und über einen pneumatischen Sperrzylinder für den Anfahrvorgang blockierbar ausgebildet ist.

8. Vorrichtung nach einem der vorhergehenden Ansprüche,
**dadurch gekennzeichnet,**
**dass** der schwimmenden Achse (21) oder den Achsen Grenzstellungsmesser (19, 20) (Sensoren) zugeordnet und deren Daten über die Robotersteuerung auswertbar sind.

9. Vorrichtung nach einem der vorhergehenden Ansprüche,
**dadurch gekennzeichnet,**
**dass** den Führungseinrichtungen (8, 9) und der Andruckrolle (7) mit Wegeventilen bzw. Druckregelventilen ausgerüstete Stellzylinder (23, 24) zugeordnet sind.

10. Verfahren zur Montage von Türdichtprofilen, die über einen Roboterarm in die Karosserieöffnung eingeführt und dann über Führungseinrichtungen und eine Andruckrolle des Roboterarms auf den Flansch der Karosserie aufgerollt wird, in dem dieser den Flansch rundum gemäß vorgegebener Daten abfährt,
**dadurch gekennzeichnet,**
**dass** das Türdichtprofil zu einem geschlossenen Ring mit Untermaß geformt und von der nachlaufenden Führungseinrichtung eingeklemmt und nach Einrollbeginn dann komplett gelöst und weiter aufgerollt wird, wobei während des Aufrollvorganges mit der Andruckrolle aufgrund der Ausbildung des Flansches notwendig werdende Ausgleichsbewegungen automatisch ausgeführt werden.

11. Verfahren nach Anspruch 10,
**dadurch gekennzeichnet,**
**dass** die Andruckrolle und/oder weitere Teilrollen schwimmend gelagert werden, wobei über Messfühler die Abweichungen gemessen und für die Raumbahnkorrektur des Roboters verwendet werden.

## Claims

1. Device for installation of sealing and covering strips, in particular self-retaining door sealing profiles (6), which are designed so that they can be rolled on to the flange (5) by means of a robot arm (2) which can be made to travel around the body opening (4) and is carried by a robot (1) which is embodied as to be pivotable directly or indirectly and in the process receives the door sealing profile (6) closed to the ring and guides it from the storage area to the body opening (4) by means of the robot arm (2), with a pressure roller (7) mounted so that it can float, and with a preceding and a following guiding device (8, 9) which are equipped to nip the door sealing profile (6), **characterised in that** the following guiding device (9) is embodied and switchable so that it can nip the door sealing profile (6), preferably during the starting operation, and **in that** the following guiding device (9) is embodied so that it automatically opens and swivels away immediately after the start of rolling.

2. Device according to claim 1, **characterised in that** the preceding and the following guiding device (8, 9) are embodied so that they open symmetrically at the pressure roller (7).

3. Device according to one of the preceding claims,
**characterised in that** the pressure roller (7) has an associated lateral retainer (12) which acts on the partly provided additional seal projection (15).

4. Device according to one of the preceding claims, **characterised in that** the pressure roller (7) is embodied so that it can be preloaded pneumatically and the preloading can be selected.

5. Device according to one of the preceding claims, **characterised in that** the retainer (12) is embodied as a guiding slide without guiding rollers.

6. Device according to one of the preceding claims, **characterised in that** the retainer (12) embodied as a guiding roller takes the form of a profile guiding cage which is operated pneumatically and is designed so as to provide preliminary orientation of the profile in the case of the preceding guiding device (8) and nipping at the start of rolling in the case of the following guiding device (9).

7. Device according to one of the preceding claims, **characterised in that** the pressure roller assembly (18) is mounted so that it can float in a second axis at right angles to the direction of installation, has no drive and is embodied so that it can be immobilised for the starting operation by means of a pneumatic locking cylinder.

8. Device according to one of the preceding claims, **characterised in that** the floating axis (21) or axes are assigned limit position measuring devices (19, 20) (sensors) and their data can be evaluated by means of the robot control system.

9. Device according to one of the preceding claims, **characterised in that** the guiding devices (8, 9) and the pressure roller (7) are assigned control cylinders (23, 24) equipped with directional control valves or pressure control valves.

10. Method for installation of door sealing profiles which are introduced into the body opening by means of a robot arm and then rolled on to the body flange by means of guiding devices and a pressure roller on the robot arm while the latter runs around the flange in accordance with predetermined data, **characterised in that** the door sealing profile is formed into an undersize closed ring and nipped by the following guiding device and then released completely after the start of rolling and rolled on further, and compensating movements which become necessary due to the form of the flange are executed automatically during the rolling operation with the pressure roller.

11. Method according to claim 10, **characterised in that** the pressure roller and/or further sub-rollers are mounted so that they can float, and the deviations are measured by means of measuring sensors and used to correct the path of the robot.

## Revendications

1. Dispositif pour monter des bandes d'étanchéité et de recouvrement, en particulier des joints d'étanchéité profilés auto-portants pour portes (6), qui peuvent être enroulés contre ou sur le flasque (5), par un bras de robot (2) qu'on peut déplacer autour de l'ouverture de carrosserie (4) et qui est porté par un robot (1) formé de manière à pouvoir basculer directement ou indirectement et donc recevant au moyen du bras de robot (2) le joint d'étanchéité profilé pour portes (6) fermé en anneau et le conduisant du lieu de stockage à l'ouverture de carrosserie (4), bras de robot ayant un galet de pression (7) logé de manière flottante ainsi qu'une installation de guidage en amont et aval (8, 9) équipées de façon à serrer le joint d'étanchéité profilé pour portes (6),
**caractérisé en ce que**
l'installation de guidage en aval (9) est formée de façon à serrer le joint d'étanchéité profilé pour portes (6) de préférence lors de l'opération de déplacement et est commutable, et l'installation de guidage en aval (9) est formée de façon à basculer en partant et à s'ouvrir automatiquement immédiatement après le début de l'enroulement.

2. Dispositif selon la revendication 1,
**caractérisé en ce que**
les installations de guidage amont et aval (8, 9) sont formées de façon à s'ouvrir symétriquement sur le galet de pression (7).

3. Dispositif selon l'une des revendications précédentes,
**caractérisé en ce qu'**
un serre-flan (12) latéral qui agit sur l'appendice d'étanchéité (15) supplémentaire partiellement prévu est associé au galet de pression (7).

4. Dispositif selon l'une des revendications précédentes,
**caractérisé en ce que**
le galet de pression (7) est contraint pneumatiquement et sa contrainte est sélectionnable.

5. Dispositif selon l'une des revendications précédentes,
**caractérisé en ce que**
le serre-flan (12) une glissière de guidage sans corps de roulement de guidage.

6. Dispositif selon l'une des revendications précédentes,
**caractérisé en ce que**
le serre-flan (12) formé en tant que corps de roulement de guidage est façonné en tant que cage de guidage profilée à actionnement pneumatique qui, lorsque l'enroulement commence, effectue une orientation préalable du profilé pour l'installation de guidage amont (8), et un blocage pour l'installation de guidage aval (9).

7. Dispositif selon l'une des revendications précédentes,
**caractérisé en ce que**
le groupe de galets de pression (18) est logé de manière flottante dans un deuxième axe orthogonalement par rapport à la direction de montage, est sans entraînement et peut être bloqué au moyen d'un vérin de blocage pneumatique pour l'opération de déplacement.

8. Dispositif selon l'une des revendications précédentes,
**caractérisé en ce que**
des capteurs de fin de course (19, 20) sont associés à l'axe (21) flottant ou aux axes et leurs données peuvent être interprétées par la commande du robot.

9. Dispositif selon l'une des revendications précédentes,
**caractérisé en ce que**
des vérins de position (23, 24) munis de soupapes à plusieurs voies ou de soupapes de réglage de pression sont associés aux installations de guidage (8, 9) et au galet de pression (7).

10. Procédé destiné à monter des joints d'étanchéité profilés pour portes, introduits dans l'ouverture de carrosserie au moyen d'un bras de robot et ensuite au moyen d'installations de guidage, et enroulés sur le flasque de la carrosserie au moyen d'un galet de pression du bras de robot, le bras de robot se déplaçant tout autour du flasque selon des données prédéfinies,
**caractérisé en ce que**
le joint d'étanchéité profilé pour portes est formé pour obtenir un anneau fermé avec une dimension inférieure, est serré par l'installation de guidage en aval et après le début de l'enroulement est intégralement détaché et enroulé plus avant, les mouvements de compensation qui deviennent nécessaires étant automatiquement réalisés pendant l'opération d'enroulement avec le galet de pression du fait de la conception du flasque.

11. Procédé selon la revendication 10,
**caractérisé en ce que**
le galet de pression et/ou d'autres galets partiels sont placés de manière flottante, les écarts étant mesurés au moyen de capteurs et utilisés pour corriger le trajet spatial du robot.
